# EUROPEAN PATENT SPECIFICATION

(11) **EP 3 075 747 B1**
(45) Date of publication and mention of the grant of the patent: **21.03.2018**
(21) Application number: 14865499.9
(22) Date of filing: 25.11.2014
(51) Int. Cl.: C08C 19/20, C08F 36/18, C08L 11/00

(54) **SULFUR-MODIFIED POLYCHLOROPRENE**
SCHWEFELMODIFIZIERTES POLYCHLOROPREN
POLYCHLOROPRÈNE MODIFIÉ PAR LE SOUFRE

(30) Priority: 26.11.2013 JP 2013244416
(43) Date of publication of application: 05.10.2016
(73) Proprietor: Denka Company Limited, Tokyo 103-8338 (JP)
(72) Inventor: NODA Naoya, Itoigawa-city Niigata 949-0393 (JP); SUZUKI Shigeru, Itoigawa-city Niigata 949-0393 (JP); SUZUKI Ryochi, Itoigawa-city Niigata 949-0393 (JP)
(74) Representative: Gulde & Partner
(86) International application number: PCT/JP2014/081036
(87) International publication number: WO 2015/080075

(56) References cited:
- WO-A1-2014/054388
- WO-A1-2014/077236
- WO-A1-2014/077236
- JP-A- H 093 120
- JP-A- S6 460 603
- JP-A- H09 501 459
- JP-A- H11 116 622
- US-A- 3 619 226
- US-A- 4 605 705
- US-A- 4 895 906
- US-A1- 2003 144 394

## Description

### Technical Field

The present disclosure relates to a sulfur-modified polychloroprene that generates a smaller amount of nitrosamine compounds during kneading or curing operation.

### Background Art

Sulfur-modified polychloroprenes are plasticized for adjustment of their molecular weights before practical use. When the sulfur-modified polychloroprenes are plasticized, a thiuram compound such as tetraethyl thiuram disulfide is used as the plasticizer.

The sulfur-modified polychloroprenes plasticized with a thiuram compound may generate nitrosamine compounds during kneading or curing operation.

There exists recently a need for a sulfur-modified polychloroprene that generates a smaller amount of nitrosamine compounds for environmental considerations.

Known as the method of making the sulfur-modified polychloroprene generate a smaller amount of nitrosamine compounds during kneading or curing operation is a method of polymerizing chloroprene in the presence of a dithiocarbamic acid salt or a xanthic acid salt (see Patent Documents 1 and 3 to 6). Also known is a method of plasticizing a sulfur-modified polychloroprene using a nonvolatile tetraalkylthiuram disulfide compound (see Patent Document 2).

### Citation List

### Patent Literatures

[Patent Document 1] JP-B No. H06-76461
[Patent Document 2] JP-ANo. H07-62155
[Patent Document 3] US 4,895,906
[Patent Document 4] US 4,605,705
[Patent Document 5] US 3,619,226
[Patent Document 6] WO 2014/077236 A1

### Summary of Invention

### Technical Problem

An object of at least one embodiment of the present invention is to provide a sulfur-modified polychloroprene that generates a smaller amount of nitrosamine compounds during kneading or curing operation.

### Solution to Problem

The sulfur-modified polychloroprene according to at least one embodiment of the present invention has functional groups having a structure represented by Chemical Formula I (in Chemical Formula I, R₀ represents an alkyl group having 1 to 4 carbon atoms and x is an integer of 2 to 8) in an amount of 0.05 to 0.5 mass % in 100 mass % of the sulfur-modified polychloroprene:
[C. 1]

-Sₓ-C(=S)-O-Rₒ I

the sulfur-modified polychloroprene being prepared by : plasticizing a sulfur-modified polychloroprene latex by adding a compound represented by Chemical Formula II (in Chemical Formula II, R₁ and R₂ each independently represent an alkyl group having 1 to 4 carbon atoms and R₁ and R₂ may be the same as or different from each other) in an amount of 0.5 to 5.0 parts by mass (based on 100 parts by mass of the solid matter in the sulfur-modified polychloroprene latex) and at least one of a compound represented by Chemical Formula III (in Chemical Formula III, R₃ to R₈ each independently represent a hydrogen atom or an alkyl group having 1 to 4 carbon atoms and R₃ to R₈ may be the same as or different from each other) and a compound represented by Chemical Formula IV (in Chemical Formula IV, R₉ to R₁₄ each independently represent a hydrogen atom or an alkyl group having 1 to 4 carbon atoms and R₉ to R₁₄ may be the same as or different from each other) in a total amount of 0.001 to 0.05 parts by mass to 100 parts by mass of the solid matter in the sulfur-modified polychloroprene latex and thus forming functional groups having a structure represented by Chemical Formula I above in the sulfur-modified polychloroprene:

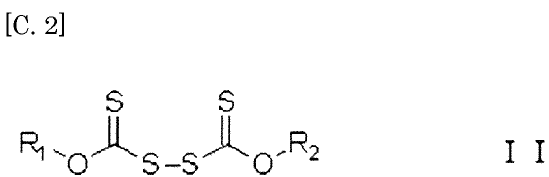

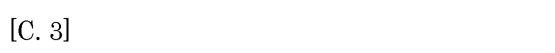

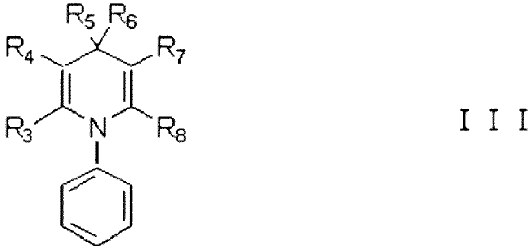

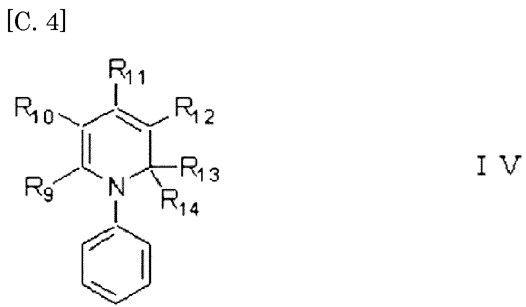

The compound represented by Chemical Formula II above may be at least one compound selected from dimethylxanthogen disulfide, diethylxanthogen disulfide, diisopropylxanthogen disulfide, and dibutylxanthogen disulfide.

The compound represented by Chemical Formula III may be at least one compound selected from 5-butyl-3-ethyl-1-phenyl-2-propyl-1,2-dihydropyridine, 3,5-diethyl-1-phenyl-2-propyl-1,2-dihydropyridine, and 2,5-diethyl-1-phenyl-3-propyl-1,2-dihydropyridine.

The compound represented by Chemical Formula IV may be at least one compound selected from 3,5-diethyl-1-phenyl-2-propyl-1,4-dihydropyridine and 4,5-diethyl-1-phenyl-2-propyl-1,4-dihydropyridine.

The "sulfur-modified polychloroprene that generates a smaller amount of nitrosamine compounds during kneading or curing operation," as used in the present disclosure, means a sulfur-modified polychloroprene that generates nitrosamine compounds in an amount of less than their detection limit of 0.004 ppm or does not generate nitrosamine compounds at all.

### Advantageous Effects of Invention

It is possible in at least one embodiment of the present invention to produce a sulfur-modified polychloroprene that generates a smaller amount of nitrosamine compounds during kneading or curing operation.

### Description of Embodiments

The sulfur-modified polychloroprene according to at least one embodiment of the present invention contains functional groups having a structure represented by Chemical Formula I above at a rate of 0.05 to 0.5 mass % in 100 mass % of the sulfur-modified polychloroprene.

### <Sulfur-modified polychloroprene>

The sulfur-modified polychloroprene can be prepared by emulsion-polymerizing chloroprene alone or chloroprene and other monomers in the presence of sulfur, to give a sulfur-modified polychloroprene latex containing sulfur in the main chain, and then plasticizing the sulfur-modified polychloroprene latex obtained using a particular compound described below and drying and cleaning the plasticized polymer by general methods.

The sulfur contained in the sulfur-modified polychloroprene forms polysulfide bonds (S2 to S8) in the sulfur-modified polychloroprene. The polysulfide bonds react with the compound represented by Chemical Formula II above, forming functional groups having a structure represented by Chemical Formula I above in the sulfur-modified polychloroprene in the plasticization step described below.

The amount of sulfur added during polymerization of chloroprene is preferably in the range of 0.2 to 0.8 parts by mass, more preferably in the range of 0.3 to 0.6 parts by mass with respect to 100 parts by mass of chloroprene. When the addition amount of sulfur is 0.2 parts by mass or more, the sulfur-modified product becomes more favorable in mechanical properties and dynamic properties and the rate of plasticization in the plasticization step is increased, leading to further increase in productivity. Alternatively when the amount of sulfur added is 0.8 parts by mass or less, processability during processing is improved.

The sulfur-modified polychloroprene is preferably adjusted to a Mooney viscosity in the range of 20 to 110 ML (1+4) 100°C, more preferably 30 to 100 ML (1+4) 100°C, still more preferably 30 to 60 ML (1+4) 100°C. It is possible, by adjusting the Mooney viscosity of the sulfur-modified polychloroprene in the range above, to suppress deposition of the sulfur-modified polychloroprene on the kneading roll due to decrease of its viscosity and kneading failure due to increase of its viscosity during kneading operation of the sulfur-modified polychloroprene.

Examples of the other monomers copolymerizable with chloroprene include 2,3-dichloro-1,3-butadiene, 1-chloro-1,3-butadiene, styrene, acrylonitrile, methacrylonitrile, isoprene, butadiene, methacrylic acid, and the esters thereof. These monomers may be used alone or in combination of two or more.

### <Functional groups having a structure represented by Chemical Formula I>

The content of the functional groups having a structure represented by Chemical Formula I above contained in 100 mass % of the sulfur-modified polychloroprene is 0.05 to 0.5 mass %, preferably 0.1 to 0.3 mass %. When the content of the functional groups having a structure represented by Chemical Formula I above is less than 0.05 mass %, the sulfur-modified polychloroprene obtained has an extremely short scorching time, leading to vulcanization during processing. Alternatively when the content of the functional groups having a structure represented by Chemical Formula I above is more than 0.5 mass %, the resulting sulfur-modified polychloroprene has an excessively low Mooney viscosity, leading to drastic deterioration of the processing efficiency of kneading operation.

For introduction of the functional groups having a structure represented by Chemical Formula I above into the sulfur-modified polychloroprene, the compound represented by Chemical Formula II above and at least one of the compounds represented by Chemical Formulae III and IV above are added to the sulfur-modified polychloroprene latex after polymerization and the mixture is plasticized.

Alternatively for adjustment of the content of the functional groups having a structure represented by Chemical Formula I above in the sulfur-modified polychloroprene, the addition amount of the compound represented by Chemical Formula II above and the plasticization period of the sulfur-modified polychloroprene are adjusted.

The plasticization is a step of chemically cleaving the molecular chains of the sulfur-modified polychloroprene or depolymerizing the sulfur-modified polychloroprene to give shorter molecular chains and thus reducing the Mooney viscosity of the obtained sulfur-modified polychloroprene into a range suitable for processing of 20 to 110 ML. Specifically, the compound represented by Chemical Formula II and at least one of the compounds represented by Chemical Formulae III and IV above are added to the sulfur-modified polychloroprene latex after polymerization and the mixture is stirred at a temperature of 40 to 70°C until it has a particular Mooney viscosity. The sulfur-modified polychloroprene latex after completion of plasticization may be converted to a solid sulfur-modified polychloroprene after the common freeze-drying and cleaning steps.

The plasticization period for plasticization of the sulfur-modified polychloroprene is preferably 30 to 100 minutes, more preferably 30 to 60 minutes, from the viewpoints of productivity and quality control. Alternatively, the plasticization temperature is preferably 20 to 70°C, more preferably 35 to 60°C, from the viewpoint of productivity.

The content of the functional groups having a structure represented by Chemical Formula I above in the sulfur-modified polychloroprene can be determined quantitatively by the following procedure.

First, the sulfur-modified polychloroprene obtained is purified with benzene and methanol and freeze-dried again, to give a measurement sample. The measurement sample obtained is dissolved in deuterated chloroform for ¹H-NMR analysis according to JIS K-6239. The measurement data thus obtained are corrected, as compared with the peak of chloroform in the solvent deuterated chloroform (7.24 ppm) as standard.

The areas of the peaks having a peak top in 3.44 to 3.52 ppm, 3.58 to 3.64 ppm, and 3.70 to 3.74 ppm are calculated based on the corrected data.

Here, the peaks at 3.44 to 3.52 ppm, 3.58 to 3.64 ppm, and 3.70 to 3.74 ppm derive from the methylene group of the chloroprene bound to "-Sx-C(=S)-O-R₁₅" in Chemical Formula V (in Chemical Formula V, P represents a polymer; R₁₅ represents an alkyl group having 1 to 4 carbon atoms; and x is an integer of 2 to 8) and "-Sx-C (=S)-O-R₁₆" in Chemical Formula VI (in Chemical Formula VI, P represents a polymer; R₁₆ represents an alkyl group having 1 to 4 carbon atoms; and x is an integer of 2 to 8):
[C. 5]

P-CH₂-C(Cl)=CH-CH₂-Sₓ-C(=S)-O-R₁₅ V

[C. 6]

P-CH₂-CH=C(Cl)-CH₂-Sₓ-C(=S)-O-R₁₅ VI

### <Compound represented by Chemical Formula II>

The compound represented by Chemical Formula II above is a compound added for plasticization of the sulfur-modified polychloroprene. As these compounds contain no nitrogen atom, which is the substance generating nitrosamine compounds, in the molecule, a sulfur-modified polychloroprene plasticized with such a compound generates a smaller amount of nitrosamine compounds during kneading or curing operation.

The compound represented by Chemical Formula II above gives thiolate anions or thiyl radicals, as the S-S bonds in the molecular structure are cleaved during plasticization. These thiolate anions or thiyl radicals cleave and bind to the polysulfide bonds (S2 to S8) in the sulfur-modified polychloroprene, giving a sulfur-modified polychloroprene containing the functional groups having a structure represented by Chemical Formula I above. Thus, one atom in the Sx in Chemical Formula I above derives from the S atom formed by decomposition of the compound of the Chemical Formula II and R₀ is an alkyl group derived from R₁ or R₂ in Chemical Formula II above.

The addition amount of the compound represented by Chemical Formula II above is preferably in the range of 0.5 to 5.0 parts by mass, more preferably in the range of 0.5 to 2.5 parts by mass, with respect to 100 parts by mass of the sulfur-modified polychloroprene. When the addition amount of the compound represented by Chemical Formula II above is 0.5 parts by mass or more, plasticization efficiency increases, leading to further improvement of productivity. Alternatively when the addition amount of the compound represented by Chemical Formula II above is 5.0 parts by mass or less, the plasticization efficiency further increases and the period to favorable vulcanization shortens, leading to further improvement of productivity.

Examples of the compound represented by Chemical Formula II above include dimethylxanthogen disulfide, diethylxanthogen disulfide, diisopropylxanthogen disulfide, and dibutylxanthogen disulfide, and at least one of them can be used. In particular, diethylxanthogen disulfide and diisopropylxanthogen disulfide are preferably used alone or in combination and diethylxanthogen disulfide or diisopropylxanthogen disulfide is more preferably used alone, because the plasticization efficiency of the sulfur-modified polychloroprene is higher.

### <Compounds represented by Chemical Formulae III and IV>

The compounds represented by Chemical Formulae III and IV above are added to accelerate the reaction of the compound represented by Chemical Formula II above plasticizing the sulfur-modified polychloroprene.

The total addition amount of the at least one of the compounds represented by Chemical Formulae III and IV above is preferably in the range of 0.0005 to 0.1 parts by mass, more preferably in the range of 0.001 to 0.05 parts by mass, with respect to 100 parts by mass of the sulfur-modified polychloroprene solid matter. It is possible, by adjusting the addition amount in the range above, to make the compounds show its plasticization-accelerating action and preserve the storage stability of the sulfur-modified polychloroprene obtained.

Examples of the compound represented by Chemical Formula III above include 5-butyl-3-ethyl-1-phenyl-2-propyl-1,2-dihydropyridine, 3,5-diethyl-1-phenyl-2-propyl-1,2-dihydropyridine, and 2,5-diethyl-1-phenyl-3-propyl-1,2-dihydropyridine, and at least one of them can be used. In particular, 5-butyl-3-ethyl-1-phenyl-2-propyl-1,2-dihydropyridine, 3,5-diethyl-1-phenyl-2-propyl-1,2-dihydropyridine, and 2,5-diethyl-1-phenyl-3-propyl-1,2-dihydropyridine are preferably used alone or in combination of two. More preferably, at least 3,5-diethyl-1-phenyl-2-propyl-1,2-dihydropyridine is used as the compound represented by Chemical Formula III above, as it is more effective in accelerating the plasticization reaction of the sulfur-modified polychloroprene.

Examples of the compound represented by Chemical Formula IV above include 3,5-diethyl-1-phenyl-2-propyl-1,4-dihydropyridine and 4,5-diethyl-1-phenyl-2-propyl-1,4-dihydropyridine, and at least one of them can be used. In particular, at least 3,5-diethyl-1-phenyl-2-propyl-1,4-dihydropyridine is preferably used, as it is more effective in accelerating the plasticization reaction of the sulfur-modified polychloroprene.

### <Other additives>

In the plasticization of the sulfur-modified polychloroprene, generally known plasticizers may be used in combination, if they are plasticizers other than thiuram compounds. Examples of the plasticizers include xanthic acid salts such as potassium ethyl xanthate and sodium 2,2-(2,4-dioxopentamethylene)-n-butyl xanthate.

A stabilizer may be added to the sulfur-modified polychloroprene for prevention of the change in Mooney viscosity during storage. Examples of the stabilizers include 2,6-di-tertiary-butyl-4-phenylphenol, 2,2'-methylene bis(4-methyl-6-tertiary-butylphenol), and 4,4'-thiobis-(6-tertiary-butyl-3-methylphenol).

### Examples

Hereinafter, advantageous effects of at least one embodiment of the present invention will be described specifically with reference to Examples and Comparative Examples.

### [Example 1]

The sulfur-modified polychloroprene of Example 1 is a sulfur-modified polychloroprene containing functional groups having a structure represented by Chemical Formula VII (in Chemical Formula VII, x is an integer of 2 to 8) as the functional groups having a structure represented by Chemical Formula I above in an amount of 0.20 mass %:
[C. 7]

-Sₓ-C(=S)-O-C₂H₅ VII

The sulfur-modified polychloroprene of Example 1 is a sulfur-modified polychloroprene containing the functional groups having a structure represented by Chemical Formula VII above that were introduced by adding a plasticizer "diethylxanthogen disulfide" as the compound represented by Chemical Formula II, a plasticization accelerator "3,5-diethyl-1-phenyl-2-propyl-1,2-dihydropyridine" as the compound represented by Chemical Formula III, and a plasticization accelerator "3,5-diethyl-1-phenyl-2-propyl-1,4-dihydropyridine" as the compound represented by Chemical Formula IV to the sulfur-modified polychloroprene and plasticizing the mixture at 50°C for 60 minutes.

The sulfur-modified polychloroprene of Example 1 generated a nitrosamine compound, namely, N-nitrosamine, at a concentration of less than 0.004 ppm, which was the detection lower limit by GC-MS. It also had a Mooney viscosity of 40 ML (1+4) 100°C, indicating that it is a practical polymer.

Specific methods of preparing the sulfur-modified polychloroprene of Example 1 and preparing and evaluating the evaluation sample are as follows:

### <Preparation of sulfur-modified polychloroprene latex>

100 parts by mass of chloroprene monomer, 0.5 parts by mass of sulfur, 105 parts by mass of pure water, 5.00 parts by mass of disproportionated rosin acid potassium salt (manufactured by Harima Chemicals, Inc.), 0.40 parts by mass of sodium hydroxide, and 0.5 parts by mass of β-naphthalenesulfonic acid formalin condensate sodium salt (product name: DEMOL N: manufactured by Kao Corp.) were added to a polymerization tank having a capacity of 30 liters. 0.1 parts by mass of a polymerization initiator potassium persulfate was added thereto, and the mixture was polymerized at a polymerization temperature of 40°C under nitrogen stream. When the polymerization rate reached 80%, a terminator phenothiazine was added thereto for termination of the polymerization.

A plasticizer emulsion containing 3.0 parts by mass of chloroprene monomer, 2.5 parts by mass of diethylxanthogen disulfide (product name: Sanbit DIX: produced by Sanshin Chemical Industry Co., Ltd.), 0.0025 parts by mass of 3,5-diethyl-1-phenyl-2-propyl-1,2-dihydropyridine, 0.0025 parts by mass of 3,5-diethyl-1-phenyl-2-propyl-1,4-dihydropyridine, 0.05 parts by mass of β-naphthalenesulfonic acid formalin condensate sodium salt, and 0.05 parts by mass of sodium lauryl sulfate was added to the polymer solution obtained after polymerization, to give a sulfur-modified polychloroprene latex before plasticization.

### <Preparation of sulfur-modified polychloroprene>

Unreacted monomers were removed from the unplasticized sulfur-modified polychloroprene latex obtained by the method described above by distillation under reduced pressure and the resulting latex was plasticized at a liquid temperature of 50°C for 60 minutes, to give a sulfur-modified polychloroprene latex after plasticization. After the plasticized sulfur-modified polychloroprene latex obtained was cooled to room temperature, it was adjusted to a pH of 6.0 by addition of acetic acid and the polymer was isolated by a common freeze-solidification method, to give a sulfur-modified polychloroprene.

### <Evaluation>

### "Content of the functional groups having a structure represented by Chemical Formula I"

The content of the functional groups having a structure represented by Chemical Formula I above in the sulfur-modified polychloroprene was determined quantitatively by the following procedure:

The sulfur-modified polychloroprene obtained was purified with benzene and methanol and freeze-dried once again, to give a measurement sample. The measurement sample obtained was subjected to ¹H-NMR analysis according to JIS K-6239. The measurement data thus obtained are corrected, as compared with the peak of chloroform in the solvent deuterated chloroform (7.24 ppm) as standard and the areas of the peaks having a peak top in 3.44 to 3.52 ppm, 3.58 to 3.64 ppm, and 3.70 to 3.74 ppm are calculated based on the corrected data. The content of the functional groups having a structure represented by Chemical Formula I was determined quantitatively from the value.

Those having a content of 0.05 to 0.5 mass % were considered satisfactory.

### "Mooney viscosity"

The Mooney viscosity of the sulfur-modified polychloroprene at 100°C was determined according to JIS K-6300-1. The measurement sample was prepared according to the section of "2.2) Roll through method (other synthetic rubbers) in 5.3.1 Collection and Preparation of test specimen" of JIS K-6300-1. The measurement was performed using a Mooney Viscometer SMV-300 manufactured by Shimadzu Corp. and a type-L rotor. The measuring condition was as follows: test temperature: 100°C, preheating period: 1 minute, test period: 4 minutes, and die sealing force: 11.5 kN.

Those having a Mooney viscosity of 20 to 110 ML (1+4) 100°C were considered satisfactory.

### "Amount of nitrosamine compounds generated"

The amount of the nitrosamine compounds generated by the sulfur-modified polychloroprene was determined quantitatively by preparing a sample for evaluation of generated nitrosamine compounds by the procedure described below, preparing a test solution according to "d)1) Immersion Extraction Method in 3.4.2 Quantitative determination of total and respective amounts of N-nitrosamines" of JIS T-9010, removing the rubber component therein by reprecipitation with hexane, and analyzing the resulting solution using a gas chromatograph mass spectrometer (GC-MS). The quantitative determination of the nitrosamine compounds was performed by the internal standard method of preparing standard solutions using a standard substance of which the nitro amine compound-generating amount is known and forming a calibration curve by measuring them under the same condition.

The measurement was performed by using a gas chromatograph Agilent 6890N and a mass spectrometer Agilent 5973 MSD manufactured by Agilent Technologies, and the generation amounts of N-nitrosodimethylamine, N-nitrosodiethylamine, N-nitrosodipropylamine, N-nitrosodibutylamine, N-nitrosopiperidine, N-nitrosomorpholine, N-nitroso-N-methyl-N-phenylamine, N-nitroso-N-ethyl-N-phenylamine, N-nitrosodiisopropylamine, N-nitroso-N-ethyl-N-methylamine, and N-nitrosodiethanolamine were determined respectively and the sum of the amounts of these compounds generated was used as the amount of nitrosamine compounds generated.

The amount of nitrosamine compounds generated was considered satisfactory when it is a value of less than its detection lower limit of 0.004 ppm.

The evaluation sample used for measurement of the amount of nitrosamine compounds generated was prepared by mixing 100 parts by mass of the sulfur-modified chloroprene obtained by the method described above with 0.5 parts by mass of stearic acid, 4 parts by mass of magnesium oxide, and 5.0 parts by mass of zinc oxide using a 8-inch roll, crosslinking the mixture under pressure at 150°C for 30 minutes, and cutting the resulting resin into an evaluation sample of 1 to 2 mm square with a weight of 5 g.

### [Examples 2 to 18 and Comparative Examples 1 to 4]

Sulfur-modified polychloroprene latexes were prepared in a manner similar to Example 1, except that the blending composition of the compounds and the plasticizer added during preparation of the sulfur-modified polychloroprene latex was altered to that shown in the following Table 1 or 2. These latexes were plasticized respectively, to give sulfur-modified polychloroprenes. The "content of the functional groups having a structure represented by Chemical Formula I" and the "Mooney viscosity" of the sulfur-modified polychloroprenes obtained were determined in a manner similar to Example 1. Separately, evaluation samples for measurement of nitrosamine compounds generation were prepared and the "amounts of nitrosamine compounds generated" were determined quantitatively in a manner similar to Example 1.

The functional groups having a structure represented by Chemical Formula I in the sulfur-modified polychloroprenes of Examples 2 to 7 and 11 to 18 and Comparative Examples 2 to 4 are the same as the functional groups having a structure represented by Chemical Formula VII.

The functional groups having a structure represented by Chemical Formula I in the sulfur-modified polychloroprene of Example 8 are the functional groups having a structure represented by the Chemical Formula VII wherein the ethyl group thereof is replaced with an isopropyl group.

The functional groups having a structure represented by Chemical Formula I in the sulfur-modified polychloroprene of Example 9 are the functional groups having the structure represented by the Chemical Formula VII wherein the ethyl group thereof is replaced with a methyl group.

The functional groups having a structure represented by Chemical Formula I in the sulfur-modified polychloroprene of Example 10 are the functional groups having a structure represented by the Chemical Formula VII wherein the ethyl group thereof is replaced with a butyl group.

The evaluation results of Examples 1 to 10 described above are summarized in the following Table 1 and those of Examples 11 to 18 and Comparative Examples 1 to 4 in the following Table 2.

**[Table 1]**

| | | Example | | | | | | | | | |
|---|---|---|---|---|---|---|---|---|---|---|---|
| | | 1 | 2 | 3 | 4 | 5 | 6 | 7 | 8 | 9 | 10 |
| Configuration | Content of functional groups having a structure represented by Chemical Formula I (mass %) | 0.20 | 0.05 | 0.50 | 0.42 | 0.34 | 0.20 | 0.08 | 0.22 | 0.18 | 0.25 |
| Evaluation | Mooney viscosity (ML(1+4)100°C) | 40 | 110 | 20 | 20 | 30 | 60 | 100 | 40 | 40 | 40 |
| | Amount of nitrosamine compounds generated (ppm) (Detection lower limit: 0.004 ppm) | <0.004 | <0.004 | <0.004 | <0.004 | <0.004 | <0.004 | <0.004 | <0.004 | <0.004 | <0.004 |
| | Sulfur-modified polychloroprene latex (parts by mass) | 100 | 100 | 100 | 100 | 100 | 100 | 100 | 100 | 100 | 100 |
| | Compound represented by Chemical Formula II (parts by mass) | | | | | | | | | | |
| | Diethylxanthogen disulfide | 2.5 | 0.5 | 5.0 | 2.5 | 2.5 | 2.5 | 2.5 | | | |
| | Diisopropylxanthogen disulfide | | | | | | | | 2.8 | | |
| | Dimethylxanthogen disulfide | | | | | | | | | 2.2 | |
| | Dibutylxanthogen disulfide | | | | | | | | | | 3.1 |
| | Compound represented by Chemical Formula III (parts by mass) | | | | | | | | | | |
| | 3,5-Diethyl-1-phenyl-2-propyl-1,2-dihydropyridine | 0.0025 | 0.0025 | 0.0025 | 0.0025 | 0.0025 | 0.0025 | 0.0025 | 0.0025 | 0.0025 | 0.0025 |
| | 5-Butyl-3-ethyl-1-phenyl-2-propyl-1,2-dihydropyridine | | | | | | | | | | |
| Composition | 2,5-Diethyl-1-phenyl-3-propyl-1,2-dihydropyridine | | | | | | | | | | |
| | Compound represented by Chemical Formula IV (parts by mass) | | | | | | | | | | |
| | 3,5-Diethyl-1-phenyl-2-propyl-1,4-dihydropyridine | 0.0025 | 0.0025 | 0.0025 | 0.0025 | 0.0025 | 0.0025 | 0.0025 | 0.0025 | 0.0025 | 0.0025 |
| | 4,5-Diethyl-1-phenyl-2-propyl-1,4-dihydropyridine | | | | | | | | | | |
| | Conventional plasticizer (parts by mass) | | | | | | | | | | |
| | Tetraethylthiuram disulfide | | | | | | | | | | |
| | Plasticization condition | | | | | | | | | | |
| | Temperature (°C) | 50 | 50 | 50 | 50 | 50 | 50 | 50 | 50 | 50 | 50 |
| | Period (minutes) | 60 | 60 | 60 | 100 | 80 | 50 | 30 | 60 | 60 | 60 |

**[Table 2]**

| | | Example | | | | | | | | Comparative Example | | | |
|---|---|---|---|---|---|---|---|---|---|---|---|---|---|
| | | 11 | 12 | 13 | 14 | 15 | 16 | 17 | 18 | 1 | 2 | 3 | 4 |
| Configuration | Content of functional groups having a structure represented by Chemical Formula I (mass %) | 0.20 | 0.21 | 0.19 | 0.19 | 0.22 | 0.20 | 0.30 | 0.50 | 0.00 | 0.03 | 1.00 | 0.03 |
| Evaluation | Mooney viscosity (ML(1+4)100°C) | 40 | 40 | 40 | 40 | 40 | 40 | 40 | 40 | 40 | 120 | 15 | >140 |
| | Amount of nitrosamine compounds generated (ppm) (Detection lower limit: 0.004 ppm) | <0.004 | <0.004 | <0.004 | <0.004 | <0.004 | <0.004 | <0.004 | <0.004 | 0.1 | <0.004 | <0.004 | <0.004 |
| | Sulfur-modified polychloroprene latex (parts by mass) | 100 | 100 | 100 | 100 | 100 | 100 | 100 | 100 | 100 | 100 | 100 | 100 |
| | Compound represented by Chemical Formula II (parts by mass) | | | | | | | | | | | | |
| | Diethylxanthogen disulfide | 2.5 | 2.5 | 2.5 | 2.5 | 2.5 | 2.5 | 5.0 | 5.0 | | 0.3 | 6.5 | 0.3 |
| | Diisopropylxanthogen disulfide | | | | | | | | | | | | |
| | Dimethylxanthogen disulfide | | | | | | | | | | | | |
| | Dibutylxanthogen disulfide | | | | | | | | | | | | |
| | Compound represented by Chemical Formula III (parts by mass) | | | | | | | | | | | | |
| | 3,5-Diethyl-1-phenyl-2-propyl-1,2-dihydropyridine | 0.005 | 0.0025 | 0.0025 | | | 0.025 | 0.0005 | | | 0.005 | 0.005 | |
| Composition | 5-Butyl-3-ethyl-1-phenyl-2-propyl-1,2-dihydropyridine | | 0.0025 | | | | | | | | | | |
| | 2,5-Diethyl-1-phenyl-3-propyl-1,2-dihydropyridine | | | 0.0025 | | | | | | | | | |
| | Compound represented by Chemical Formula IV (parts by mass) | | | | | | | | | | | | |
| | 3,5-Diethyl-1-phenyl-2-propyl-1,4-dihydropyridine | | | | 0.005 | 0.0025 | 0.025 | 0.0005 | | | 0.005 | 0.005 | |
| | 4,5-Diethyl-1-phenyl-2-propyl-1,4-dihydropyridine | | | | | 0.0025 | | | | | | | |
| | Conventional plasticizer (parts by mass) | | | | | | | | | | | | |
| | Tetraethylthiuram disulfide | | | | | | | | | 2.5 | | | |
| | Plasticization condition | | | | | | | | | | | | |
| | Temperature (°C) | 50 | 50 | 50 | 50 | 50 | 50 | 50 | 50 | 50 | 50 | 50 | 50 |
| | Period (minutes) | 60 | 70 | 80 | 60 | 80 | 60 | 30 | 300 | 100 | 240 | 10 | 300 |

The sulfur-modified polychloroprenes of Examples 1 to 18 in at least one embodiment of the present invention generated a smaller amount of nitrosamine compounds during kneading or curing operation.

The sulfur-modified polychloroprene of Example 18 was prepared without addition of the compound represented by Chemical Formula III and the compound represented by Chemical Formula IV among the raw materials of Example 3. The sulfur-modified polychloroprene of Example 18 had a higher Mooney viscosity, although it had a plasticization period longer than the sulfur-modified polychloroprene of Example 3.

The results show that the compounds represented by Chemical Formulae III and IV are effective in reducing the Mooney viscosity of the sulfur-modified polychloroprene, i.e., in accelerating the plasticization reaction further.

The sulfur-modified polychloroprene of Comparative Example 1 generated nitrosamine. It is probably because the sulfur-modified polychloroprene did not contain the functional groups having a structure represented by Chemical Formula I above. The sulfur-modified polychloroprene of Comparative Example 2 had a Mooney viscosity of not lower than 120 ML (1+4) 100°C even after plasticization for 240 minutes and was thus not suited for practical application. It is probably because the content of the functional groups having a structure represented by Chemical Formula I above was less than 0.05 mass %. The sulfur-modified polychloroprene of Comparative Example 3 had an excessively low Mooney viscosity of 15 ML (1+4) 100°C, even though the plasticization period was shortened to 10 minutes, and thus, it was not suited for industrial production. It is probably because the content of the functional groups having a structure represented by Chemical Formula I above was more than 0.5 mass %.

The sulfur-modified polychloroprene of Comparative Example 4 was prepared without addition of the compounds represented by Chemical Formulae III and IV among the raw materials of Comparative Example 2. The sulfur-modified polychloroprene of Comparative Example 4 had a Mooney viscosity of not lower than its detection upper limit of 140 ML (1+4) 100°C even after plasticization for 300 minutes and had a value higher than that of Examples 1 to 17. In addition, the sulfur-modified polychloroprene of Comparative Example 4 had a Mooney viscosity higher than that of the sulfur-modified polychloroprene of Comparative Example 2, although the plasticization period was longer.

The results above show that the compounds represented by Chemical Formulae III and IV are effective in reducing the Mooney viscosity of the sulfur-modified polychloroprene, i.e., in accelerating the plasticization reaction further.

The present disclosure may have the following aspects:
(1) A sulfur-modified polychloroprene, comprising the functional groups having a structure represented by Chemical Formula I above in an amount of 0.05 to 0.5 mass %.
(2) The sulfur-modified polychloroprene described in (1) above, prepared by plasticizing a sulfur-modified polychloroprene latex by adding 0.5 to 5.0 parts by mass of a compound represented by Chemical Formula II above and at least one of the compounds represented by Chemical Formulae III and IV in a total amount of 0.001 to 0.05 parts by mass to 100 parts by mass of the solid matter in the sulfur-modified polychloroprene latex and thus, forming the functional groups having a structure represented by Chemical Formula I above in the sulfur-modified polychloroprene.
(3) The sulfur-modified polychloroprene described in (2) above, wherein the compound represented by Chemical Formula II above is at least one compound selected from dimethylxanthogen disulfide, diethylxanthogen disulfide, diisopropylxanthogen disulfide, and dibutylxanthogen disulfide.
(4) The sulfur-modified polychloroprene described in (2) or (3) above, wherein the compound represented by Chemical Formula III above is at least one compound selected from 5-butyl-3-ethyl-1-phenyl-2-propyl-1,2-dihydropyridine, 3,5-diethyl-1-phenyl-2-propyl-1,2-dihydropyridine, and 2,5-diethyl-1-phenyl-3-propyl-1,2- dihydropyridine.
(5) The sulfur-modified polychloroprene described in any one of (2) to (4) above, wherein the compound represented by Chemical Formula IV above is at least one compound selected from 3,5-diethyl-1-phenyl-2-propyl-1,4-dihydropyridine and 4,5-diethyl-1-phenyl-2-propyl-1,4-dihydropyridine.

## Claims

1. A sulfur-modified polychloroprene, comprising functional groups having a structure represented by Chemical Formula I, wherein R₀ represents an alkyl group having 1 to 4 carbon atoms and x is an integer of 2 to 8, in an amount of 0.05 to 0.5 mass % contained in 100 mass % of the sulfur-modified polychloroprene,
-Sₓ-C(=S)-O-Rₒ I
the sulfur-modified polychloroprene being prepared by:
plasticizing a sulfur-modified polychloroprene latex by
adding a compound represented by Chemical Formula II, wherein R₁ and R₂ each independently represent an alkyl group having 1 to 4 carbon atoms and R₁ and R₂ may be the same as or different from each other, in an amount of 0.5 to 5.0 parts by mass based on 100 parts by mass of the solid matter in the sulfur-modified polychloroprene latex, 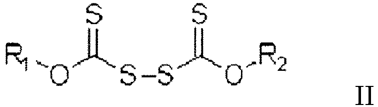
and at least one of a compound represented by Chemical Formula III and a compound represented by Chemical Formula IV, wherein R₃ to R₈ and R₉ to R₁₄ each independently represent a hydrogen atom or an alkyl group having 1 to 4 carbon atoms and R₃ to R₈ and R₉ to R₁₄ may be the same as or different from each other, in a total amount of 0.001 to 0.05 parts by mass based on 100 parts by mass of the solid matter in the sulfur-modified polychloroprene latex, 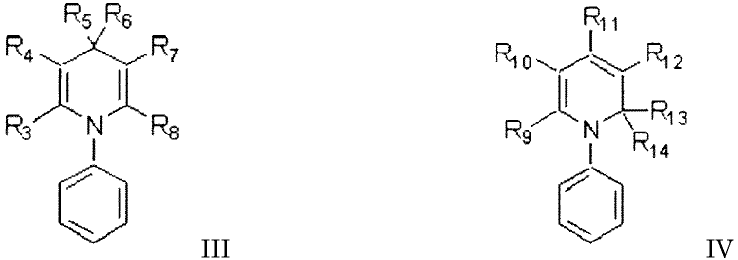
thus forming the functional groups having a structure represented by Chemical Formula I above in the sulfur-modified polychloroprene.

2. The sulfur-modified polychloroprene according to Claim 1, wherein the compound represented by Chemical Formula II above is at least one compound selected from dimethylxanthogen disulfide, diethylxanthogen disulfide, diisopropylxanthogen disulfide, and dibutylxanthogen disulfide.

3. The sulfur-modified polychloroprene according to Claim 1, wherein the compound represented by Chemical Formula III above is at least one compound selected from
5-butyl-3-ethyl-1-phenyl-2-propyl-1,2-dihydropyridine,
3,5-diethyl-1-phenyl-2-propyl-1,2-dihydropyridine, and
2,5-diethyl-1-phenyl-3-propyl-1,2-dihydropyridine.

4. The sulfur-modified polychloroprene according to Claim 1, wherein the compound represented by Chemical Formula IV above is at least one compound selected from
3,5-diethyl-1-phenyl-2-propyl-1,4-dihydropyridine and
4,5-diethyl-1-phenyl-2-propyl-1,4-dihydropyridine.

## Patentansprüche

1. Schwefelmodifiziertes Polychloropren, umfassend funktionelle Gruppen mit einer Struktur, dargestellt durch die chemische Formel I, wobei R₀ einen Alkylrest mit 1 bis 4 Kohlenstoffatomen bedeutet und x eine ganze Zahl von 2 bis 8 ist, in einer Menge von 0,05 bis 0,5 Masse-%, enthalten in 100 Masse-% des schwefelmodifizierten Polychloroprens,
-Sₓ-C(=S)-O-Rₒ I
wobei das schwefelmodifizierte Polychloropren hergestellt ist durch:
Plastifizieren eines schwefelmodifizierten Polychloropren-Latex durch
Zugeben einer Verbindung, dargestellt durch die chemische Formel II, wobei R₁ und R₂ jeweils unabhängig voneinander einen Alkylrest mit 1 bis 4 Kohlenstoffatomen bedeuten und R₁ und R₂ gleich sein oder sich voneinander unterscheiden können, in einer Menge von 0,5 bis 5,0 Masseteilen, bezogen auf 100 Masseteile des Feststoffs in dem schwefelmodifizierten Polychloropren-Latex, 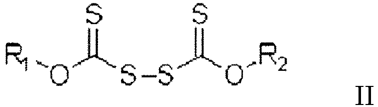
und von mindestens einer von einer Verbindung, dargestellt durch die chemische Formel III, und einer Verbindung, dargestellt durch die chemische Formel IV, wobei R₃ bis R₈ und R₉ bis R₁₄ jeweils unabhängig voneinander ein Wasserstoffatom oder einen Alkylrest mit 1 bis 4 Kohlenstoffatomen bedeuten und R₃ bis R₈ und R₉ bis R₁₄ gleich sein oder sich voneinander unterscheiden können, in einer Gesamtmenge von 0,001 bis 0,05 Masseteilen, bezogen auf 100 Masseteile des Feststoffs in dem schwefelmodifizierten Polychloropren-Latex, 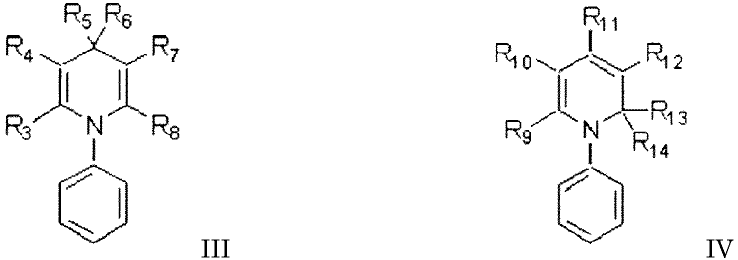
dadurch Bilden der funktionellen Gruppen mit einer Struktur, dargestellt durch die vorstehende chemische Formel I, in dem schwefelmodifizierten Polychloropren.

2. Schwefelmodifiziertes Polychloropren nach Anspruch 1, wobei die Verbindung, dargestellt durch die vorstehende chemische Formel II, mindestens eine Verbindung ist, ausgewählt aus Dimethylxanthogendisulfid, Diethylxanthogendisulfid, Diisopropylxanthogendisulfid und Dibutylxanthogendisulfid.

3. Schwefelmodifiziertes Polychloropren nach Anspruch 1, wobei die Verbindung, dargestellt durch die vorstehende chemische Formel III, mindestens eine Verbindung ist, ausgewählt aus
5-Butyl-3-ethyl-1-phenyl-2-propyl-1,2-dihydropyridin,
3,5-Diethyl-1-phenyl-2-propyl-1,2-dihydropyridin und
2,5-Diethyl-1-phenyl-3-propyl-1,2-dihydropyridin.

4. Schwefelmodifiziertes Polychloropren nach Anspruch 1, wobei die Verbindung, dargestellt durch die vorstehende chemische Formel IV, mindestens eine Verbindung ist, ausgewählt aus
3,5-Diethyl-1-phenyl-2-propyl-1,4-dihydropyridin und
4,5-Diethyl-1-phenyl-2-propyl-1,4-dihydropyridin.

## Revendications

1. Polychloroprène modifié par le soufre, comprenant des groupes fonctionnels ayant une structure représentée par la formule chimique I, R₀ représentant un groupe alkyle ayant 1 à 4 atomes de carbone et x étant un entier de 2 à 8, à une teneur de 0,05 à 0,5 % massique, contenu dans 100 % massique de polychloroprène modifié par le soufre,
-Sₓ-C(=S)-O-Rₒ I
le polychloroprène modifié par le soufre étant préparé par :
plastifier un latex de polychloroprène modifié par le soufre en
ajouter un composé représenté par la formule chimique II, R₁ et R₂ représentant chacun indépendamment un groupe alkyle ayant 1 à 4 atomes de carbone et R₁ et R₂ étant les mêmes ou différents l'un de l'autre, à une teneur de 0,5 à 5,0 parties en masse sur la base de 100 parties en masse de matières solides du latex de polychloroprène modifié par le soufre, 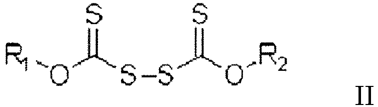
et au moins un parmi le groupe se composant d'un composé représenté par la formule chimique III et d'un composé représenté par la formule chimique IV, R₃ et R₈ et R₉ et R₁₄ représentant chacun indépendamment un atome d'hydrogène ou un groupe alkyle ayant 1 à 4 atomes de carbone et R₃ et R₈ et R₉ et R₁₄ étant les mêmes ou différents les uns des autres, à une teneur totale de 0,001 à 0,05 parties en masse sur la base de 100 parties en masse de matières solides du latex de polychloroprène modifié par le soufre, 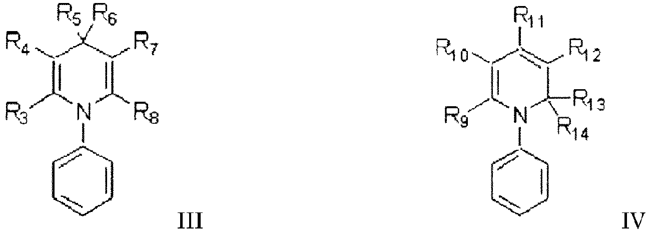
format ainsi les groupes fonctionnels ayant une structure représentée par la formule chimique I ci-dessus dans le polychloroprène modifié par le soufre.

2. Polychloroprène modifié par le soufre selon la revendication 1, le composé représenté par la formule chimique II ci-dessus étant au moins un composé sélectionné parmi le groupe se composant de : disulfure de diméthylxanthogène, disulfure de diéthylxanthogène, disulfure de di-isopropylxanthogène et disulfure de dibutylxanthogène.

3. Polychloroprène modifié par le soufre selon la revendication 1, le composé représenté par la formule chimique III ci-dessus étant au moins un composé sélectionné parmi le groupe se composant de :
5-butyl-3-éthyl-1-phényl-2-propyl-1,2-dihydropyridine,
3,5-diéthyl-1-phényl-2-propyl-1,2-dihydropyridine, et
2,5-diéthyl-1-phényl-3-propyl-1,2-dihydropyridine.

4. Polychloroprène modifié par le soufre selon la revendication 1, le composé représenté par la formule chimique IV ci-dessus étant au moins un composé sélectionné parmi le groupe se composant de :
3,5-diéthyl-1-phényl-2-propyl-1,4-dihydropyridine et
4,5-diéthyl-1-phényl-2-propyl-1,4-dihydropyridine.
